**Europäisches Patentamt**

**European Patent Office**

**Office européen des brevets**

(11) Publication number: **0 161 798**
**B1**

(12) **EUROPEAN PATENT SPECIFICATION**

(45) Date of publication of patent specification: **22.11.90**

(51) Int. Cl.⁵: **G 06 F 3/00**

(21) Application number: **85302515.3**

(22) Date of filing: **10.04.85**

(54) Modular input device system.

(30) Priority: **03.05.84 US 606503**

(43) Date of publication of application:
**21.11.85 Bulletin 85/47**

(45) Publication of the grant of the patent:
**22.11.90 Bulletin 90/47**

(84) Designated Contracting States:
**DE FR GB NL**

(56) References cited:
**GB-A-1 596 028**

**BROWN BOVERI REVIEW, vol. 69, no. 9/10,
September/October 1982, pages 310-320,
Baden, CH; H. WALKNER et al.: "Sub-centralized
and decentralized peripherals for industrial
process control systems"**

**DATABUS, no. 4, April 1982, pages 35-37,
Deventer, NL; J. VAN EGDOM: "Serie-interface
voor draagbare apparatuur"**

(73) Proprietor: **TEKTRONIX, INC.
Howard Vollum Park 14150 S.W. Karl Braun
Drive
Beaverton Oregon 97005 (US)**

(72) Inventor: **Williams, David L.
20943 S.W. 87th Court
Tualatin Oregon 97062 (US)**

(74) Representative: **Wright, Peter David John et al
R.G.C. Jenkins & Co. 26 Caxton Street
London SW1H 0RJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Field of Invention

This invention relates to computer terminals and more particularly to computer terminals having a multiple of input devices that are simultaneously connected to the terminal.

Background of Invention

A computer terminal is the basic unit that links the user or operator to a central processing unit or computer.

Thus the user "communicates" to the computer through the terminal. The user inputs that communication to the terminal through a variety of peripheral units that, among others, includes "key boards", "key pads", "joy sticks" and "tablets". The "language" used by each of these peripheral units is unique to that unit and thus the terminal must have the capability of translating each of the peripheral languages into the computer's language for conveyance to the computer.

Prior terminals are designed to accommodate specific ones of the peripheral units. For example, a terminal designed to accommodate the four peripheral units referred to above will have a specific outlet for connection with each of the units and internal circuitry that translates that units language to the base computer language.

The problem with the above described basic terminal design is that it creates a very cumbersome work station for an operator who needs several of the peripheral units hooked up and operating at the same time. An interconnecting cable runs from each of the peripheral units to the specific outlet or receptacle for that unit. The operator will locate the unit at a position where he can conveniently use it. Thus the units tend to be scattered around the work station with the cables running every which way, crossing over, under, and around other cables in its path from the selected location of the unit to the terminal.

Brief Description of Invention

Aspects of the present invention are set out in the accompanying claims. The present invention provides in a preferred embodiment a micro processor controller in the terminal unit and a micro processor slave in each of the peripheral units. The controller is programmed to interface with all of the microprocessor slaves and can thus be interconnected through a single outlet to any one of the peripheral units.

Rather than having an interconnecting cable running from each unit to the terminal, the present system provides a single cable running from the terminal to only one of the units. Each unit is provided with a bus segment that is interconnected with the micro processor slave of that unit and includes four external outlets or receptacles (e.g. two at the top edge and one at each of the side edges). The cable is connected to a top edge outlet of that unit.

A second unit is connected through one of its side edge receptacles directly to a side edge receptacle or outlet of the first unit thereby interconnecting the two bus segments. The micro processor slave of the second unit is thus connected to the bus segment of the first unit and through it to the cable and then to the terminal. The micro processor slaves are controlled to communicate with the terminal sequentially.

Any of the units can be directly connected to the terminal, and other of the units can be organized as desired on one side or the other of the directly connected unit, with another unit connected to its other side outlet etc. The units can be mechanically interlocked to effectively create a single multi purpose peripheral panel board rather than the multiple of scattered units of the prior systems.

Detailed Description and Drawings

Having thus briefly described a preferred embodiment of the invention, the following detailed description is provided with reference to the drawings wherein:

Fig. 1 is a schematic illustration of a work station including a terminal and peripheral units of the prior art;

Fig. 2 is a schematic illustration of a work station incorporating the present invention;

Fig. 3 is an enlarged perspective view of a peripheral unit used in the work station of Fig. 2;

Fig. 4 is a plan view of the peripheral unit of Fig. 3 illustrating, in schematic, the internal components thereof;

Fig. 5 is a side view of the peripheral unit of Fig. 4. and

Fig. 6 is a perspective view illustrating the locking mechanism used to interlock the peripheral units.

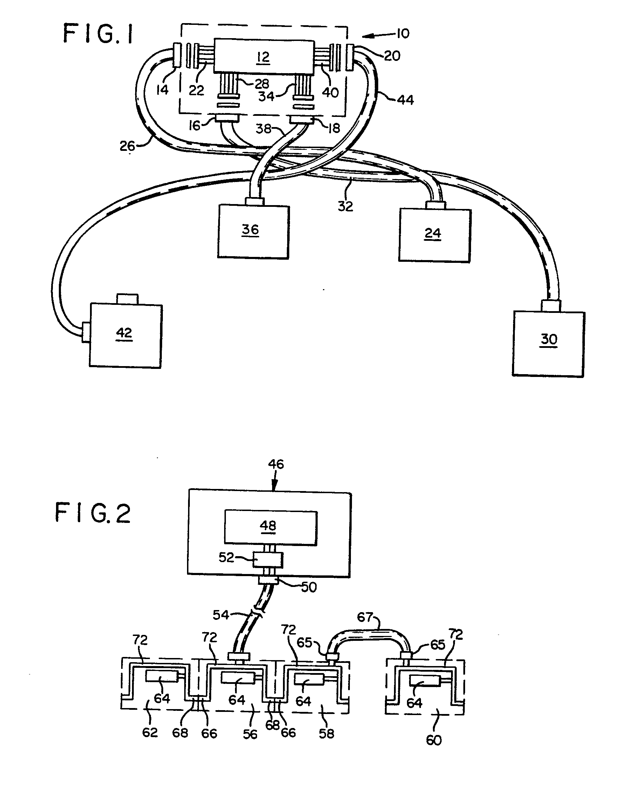

Referring to the prior art work station of Fig. 1, a terminal 10 includes a central storage unit 12 that receives and stores information to be conveyed to a central processing unit (computer). Interconnected to the storage unit 12 are four receptacles 14, 16, 18, and 20. The circuitry connecting each of the receptacles to the central storage are designed for a specific function. For example, the circuit 22 is designed to accommodate the signals generated by "tablet" 24 which is connected to the receptacle 14 by cable 26. Circuit 28 accommodates a "key board" 30 which is connected to receptacle 16 by cable 32. Circuit 34 accommodates a "key pad" 36 connected to receptacle 18 by cable 38, and circuit 40 accommodates a "joy stick" 42 connected to receptacle 20 through cable 44.

As illustrated, it is assumed that the terminal operator or user is right handed and desires the tablet and key board on the right side of the station, the key pad directly in front, and joy stick to his left. This organization may be dictated by frequency of use, personal preference, size and shape of work station, convenience, or whatever. Another station may of course be completely rearranged. However, in every case, as long as the basic terminal design is maintained, the location of the cable hookups will be the same and it is the interweaving of the cables and the locations of the peripheral units that changes.

Fig. 2 illustrates the arrangement of a work station that is achievable with the present invention. Basically, a computer terminal 46 includes a storage unit 48 that is interconnected to a single receptacle 50 through a micro processor controller 52. A single cable 54 connects the receptacle 50 to a selected primary peripheral unit 56 e.g. the key pad. Other peripheral units (secondary units) having identical receiving and transmitting capability are mechanically and electronically connected to peripheral unit 56 in a manner which will be described hereafter. Each secondary unit connected to the primary unit becomes an extension of the circuitry, and other of the units can be connected to it as illustrated by the interconnection of a fourth peripheral unit 60 (e.g. a tablet) to the secondary unit 58 (e.g. a key board). For comparison purposes, unit 62 is considered to be a joy stick and, as will be noted, the work station of Fig. 2 is organized in a manner similar to Fig. 1 but without the disarray that is inherent with the prior system. The work station of Fig. 2 can be rearranged in any desired manner by interchanging any or all of the peripheral units, and the general neatness and order of the work station will be retained.

The Electronics

The microprocessor is conventional except for the manner of its application and interaction with the other components of the system. Micro processors are well known for their capability of translating various forms of electronic communication into basic computer language. The incorporation of such micro processors into the present system accordingly does not require the teaching of special electronic circuitry. It will be sufficient to explain that the micro processor 52 functions as a controller, capable of receiving the input from any of the peripheral units through the micro processor slaves 64 provided for each of the units 56, 58, 60, and 62. Thus each peripheral unit, whether adapted to function through a key board, joy stick, or whatever, conveys the special language of that unit to its micro processor slave 64 which in turn transmits the appropriate signals through cable 54 to the controller 52. The controller 52 is programmed to recognize the language it receives from the micro processor slave and sends out the appropriate instructions to the terminals memory for conveyance to the computer.

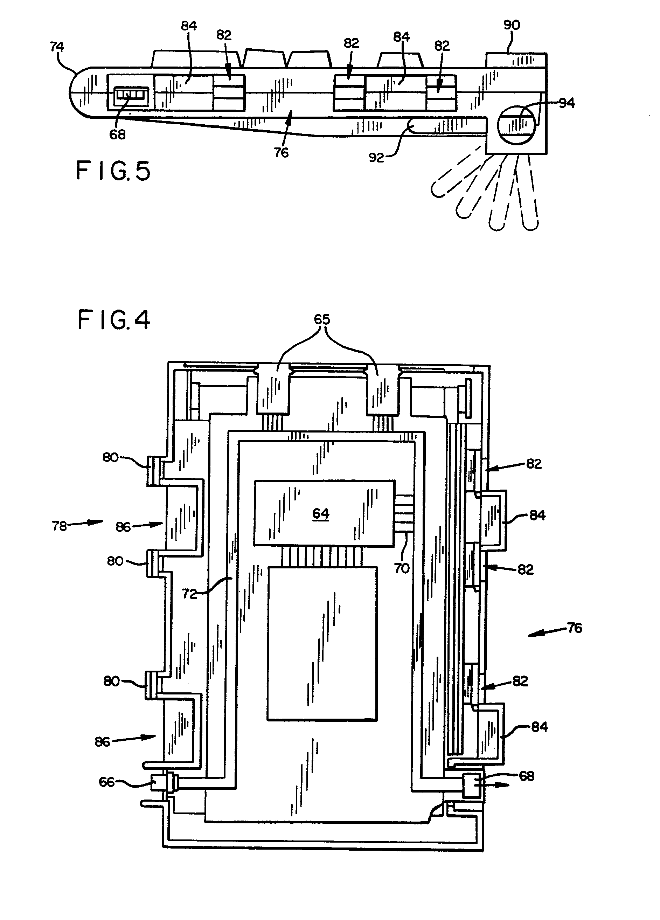

Whereas conveyance of the various signals from the peripheral units to a common receptacle is thus made feasible, the manner of converging these signals will now be addressed. In the present embodiment, each of the peripheral units is provided with an internal bus segment 72 (see Figs. 2, 3, and 4). This internal bus segment 72 functions like an extension of the cable 54. As noted particularly in Fig. 4, there are four external receptacles that communicate with the bus segment 72. Receptacles 65 at the top of the unit are designed for cable connection whereas receptacle 66 and 68, one on each side of the unit, are designed for unit interlock to be described hereafter. A fifth interconnection 70 is provided internally from the micro processor slave 64 to the bus segment 72.

The units 56, 58, and 62 are interlocked, with male receptacle 66 of unit 56 connected with female recepticle 68 of unit 62. Female receptacle 68 of unit 56 is connected with male receptacle 66 of unit 58. Whereas the tablet 60 is generally a larger unit and preferably set apart, this unit is connected by a cable 67 extending between receptacles 65 of the respective units 58 and 60. With cable 54 connected to one of the receptacles 65 of unit 56, it will be appreciated that all of the bus segments 72 of the unit are interconnected with each other and accordingly with cable 54. Each of the micro processor slaves 64 are connected to the respective bus segments and accordingly are connected to the controller 52 as well.

The Mechanical Interlock

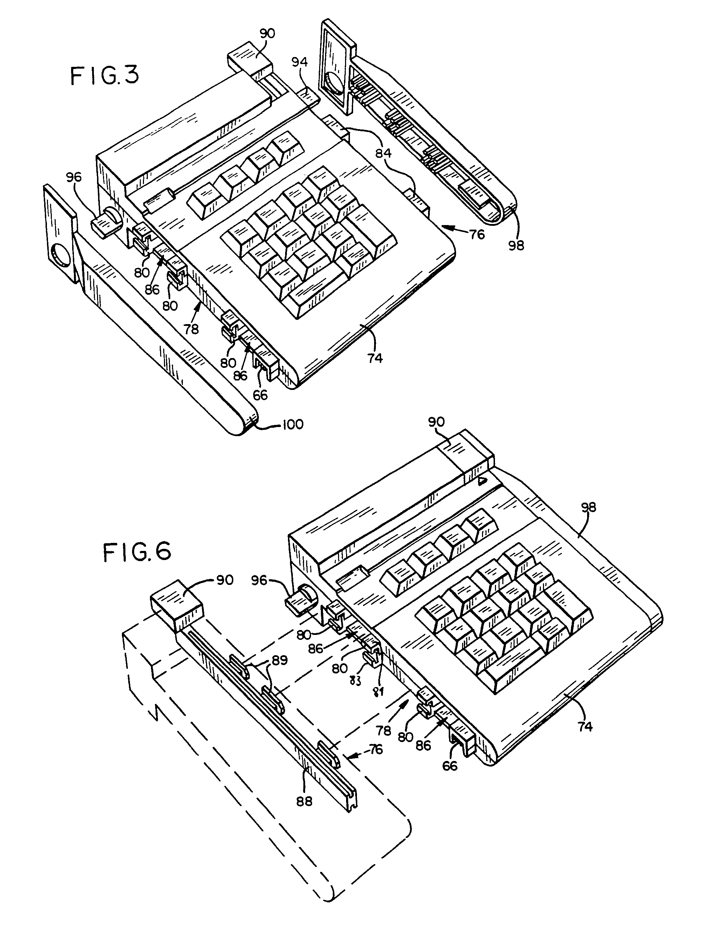

The mechanical interlock system is illustrated in Figs. 3, 4, 5 and 6. A peripheral unit (56, 58, 60 and 62) includes a housing 74 having an interlock mechanism wherein a first half 76 of the mechanism is provided on the right side of the unit which is adapted to engage and interlock with the second half 78 on the left side of a second unit. Each of the units have similar right and left side interlock halves. Thus the left side of any one of the units can be interlocked with the right side of any other of the peripheral units.

The interlock components include fastening lugs 80 of the mechanism 78 that project into openings 82 of the mechanism 76, and stiffening lugs 84 of the mechanism 76 that project into openings 86 of mechanism 78. The fastening lugs 80 each have a pair of vertically spaced apart "C" shaped sections such as those shown at 81 and 83 that are mounted in opposed fashion so that the open sides of the "C" shaped sections face each another. A slide 88 of mechanism 76 carries tongue portions 89 that are slid in and out of locking engagement with the fastening lugs 80 through manipulation of lever 90. The tongue portions 89 are "T" shaped in cross section with the cross bar 85 of the "T" extending vertically. The ends of the cross bar 85 mate with the "C" shaped sections of the lugs 80 to form a stable and secure connection between laterally adjacent peripheral units. The slide 88 is enclosed within the interior of its peripheral unit while the lever 90 extends above the top surface of the unit so as to be accessible by the user for actuating the slide 88. Upon achieving interlock of the units, the male and female receptacles 66 and 68 are interengaged and bus segments 72 of the two units are connected.

A pivotal support 92 is provided on each side of each unit and by turning knob 94 the supports are pivoted between a position flat against the housing, and projected outwardly therefrom (dashed lines of Fig. 5) to elevate the unit for more convenient operation. When the units are interlocked as previously described, the knobs 94 having finger grips 96 are designed to be nested together through the overlapping of the finger grips 96. In the nested condition, the knobs must be turned together with both supports 92 either pivoted down or up. In operation, the intermediate supports 92, having the knobs nested together, will remain in the up or folded position.

As illustrated in Fig. 3, side caps 98 and 100 are designed to cover the exposed interlocking mechanism 76 and 78. These side caps are snap fit into place and easily removable when it is desired to interlock that side to another unit.

Summarization of Invention

It will be understood that each different work station and each different operator for the work station requires a customized arrangement of the peripheral units assigned to that station. It is believed preferable that these units, when arranged as desired, be locked together to produce a multi functional unitized panel.

In the preferred embodiment of the invention, micro processors are incorporated into the terminal and into the peripheral units to enable the multiple units to communicate with the terminal through a common receptacle. A common bus is provided that is connected into the common receptacle, and each of the units are connected to the bus. This bus is provided by interconnecting bus segments that are incorporated directly into each of the unit's housing. Thus adding units will extend the bus and achieve interconnection without adding cable.

Whereas multiple units arranged around a station are cumbersome to work with, the ability to lock the units together, as described hereinabove, is considered beneficial. However, the receptacles 65 provided in each of the peripheral units allow cable connection to any of the units should interlock with the unit not be desired e.g. as shown for the tablet 60. This arrangement still permits direct cross over connection from one unit to the other and to the common terminal connection through cable 54.

**Claims**

1. A connection system for linking peripheral units to a computer terminal (46), comprising:
two or more computer terminal peripheral units (56, 58, 60, 62) positionable remote from the computer terminal (46), each peripheral unit (56, 58, 60, 62) being operable for generating a signal;
a processor (64) comprised in each peripheral unit (56, 58, 60, 62) for receiving and processing the signal generated by the peripheral unit (56, 58, 60, 62);
a bus segment (72) comprised in each remote peripheral unit (56, 58, 60, 62), each bus segment (72) having an end receptacle (66, 68) formed on each end thereof and a further receptacle (65) attached to each bus segment (72) between the end receptacles (66, 68) thereof whereby the bus segment (72) of one peripheral unit can be connected via a receptacle (e.g. 66) thereof with the bus segment (72) of another peripheral unit, the connected bus segments (72) conducting therethrough the processed signals of the peripheral units (56, 58, 60, 62) to which the connected bus segments (72) are mounted; and
a single cable (54) interconnected between the computer terminal (46) and one (65) of the receptacles (65, 66, 68) for transmitting to the terminal (46) the processed signals that are conducted through the connected bus segments (72).

2. A system according to claim 1, wherein said end receptacles (66, 68) are arranged for connecting the bus segment (72) of the respective peripheral unit to those (72) of other peripheral units, and said further receptacle (65) is a cable receptacle enabling connection to said cable (54).

3. A system according to claim 2, wherein each bus segment (72) has a second cable receptacle (65) attached thereto to permit connection between the bus segments (72) of two peripheral units (58, 60) that are spaced apart from each other.

4. A system according to any preceding claim further including a controller (52) connected to the computer terminal (46) and programmed to receive the processed signals and to control the sequence with which the processed signals are conducted through the connected bus segments (72) to the controller (52).

5. A system according to any preceding claim further including connecting means (80, 89) for connecting two peripheral units, the connecting means (80, 89) comprising:
a set of lugs (80) mounted on one side of each peripheral unit (56, 58, 60, 62), each lug (80) having a spaced-apart "C" shaped section; and
a set of "T" shaped tongue portions (89) slidably mounted on the opposite side of each peripheral unit (56, 58, 60, 62) for engaging lugs (80) on adjacent peripheral units, whereby laterally adjacent peripheral units may be securely connected together.

6. A system as claimed in any one of claims 1 to 4 wherein locking lugs (80) are provided on one side of a first one of the units (56, 58, 60, 62) and a locking slide (88) is provided on one side of a second one of the units (56, 58, 60, 62), the locking slide (88) being adapted to engage with the locking lugs (80) of the second unit, and a control lever (90) connected to the locking slide (88) for manual sliding of the slide (88) into and out of locking engagement with the locking lugs (80).

7. A system as claimed in claim 6 wherein stiffening lugs (84) are provided on the side of the second unit and are adapted to protrude into receiving openings (86) provided in the side of the first unit for securing structural strength and rigidity of the interconnection between the units.

8. A system according to any preceding claim wherein four receptacles (65, 66, 68) are provided, one receptacle (66 or 68) provided at each of two sides to interconnect with similarly structured units when mechanically locked to such units at either of said sides, and two receptacles (65) adapted for cable connection to enable connection to a terminal (46) and cross over connection to another peripheral unit.

## Patentansprüche

1. Verbindungssystem zum Verbinden von peripheren Einheiten mit einem Computer-Terminal (46) mit:

zwei oder mehr peripheren Computer-Terminal einheiten (56, 58, 60, 62), die vom Computer-Terminal (46) entfernt angeordnet werden können, wobei jede periphere Einheit (56, 58, 60, 62) so betrieben werden kann, daß sie ein Signal erzeugt, einem Prozessor (64), der in jeder peripheren Einheit (56, 58, 60, 62) enthalten ist, um das durch die periphere Einheit (56, 58, 60, 62) erzeugte Signal zu empfangen und zu verarbeiten, einem Datensammelleitungssegment (72), das in jeder entfernt angeordneten peripheren Einheit (56, 58, 60, 62) enthalten ist, wobei jedes Datensammelleitungssegment (72) eine Endbuchse (66, 68), die an jedem Ende ausgebildet ist, und eine weitere Buchse (65) aufweist, die an jedem Datensammelleitungssegment (72) zwischen den Endbuchsen (66, 68) angebracht ist, so daß das Datensammelleitungssegment (72) einer peripheren Einheit über eine Buchse (z.B. 66) mit dem Datensammelleitungssegment (72) einer anderen peripheren Einheit verbunden werden kann, und die miteinander verbundenen Datensammelleitungssegmente (72) die verarbeiteten Signale der peripheren Einheiten (56, 58, 60, 62) hindurchführen können, an denen die miteinander verbundenen Datensammelleitungssegmente (72) vorgesehen sind, und

einem einzelnen Kabel (54), das zwischen das Computer-Terminal (46) und eine Buchse (65) der Buchsen (65, 66, 68) geschaltet ist, um die verarbeiteten Signale, die über die miteinander verbundenen Datensammelleitungssegmente (72) geführt werden, auf das Terminal (46) zu übertragen.

2. System nach Anspruch 1, bei dem die Endbuchsen (66, 68) zur Verbindung des Datensammelleitungssegmentes (72) der jeweiligen peripheren Einheit mit den Segmenten (72) anderer peripherer Einheiten ausgebildet sind und die weitere Buchse (65) eine Kabelbuchse ist, die einen Anschluß an das Kabel (54) ermöglicht.

3. System nach Anspruch 2, bei dem jedes Datensammelleitungssegment (72) eine zweite Kabelbuchse (65) hat, die daran angebracht ist, um eine Verbindung zwischen den Datensammelleitungssegmenten (72) von zwei peripheren Einheiten (58, 60) zu erlauben, die im Abstand voneinander angeordnet sind.

4. System nach einem der vorhergehenden Ansprüche mit einem Steuerteil (52), der mit dem Computer-Terminal (46) verbunden und so programmiert ist, daß er die verarbeiteten Signale empfängt und die Abfolge steuert, in der die verarbeiteten Signale über die miteinander verbundenen Datensammelleitungssegmente (72) zum Steuerteil (52) geleitet werden.

5. System nach einem der vorhergehenden Ansprüche mit Anschlußeinrichtungen (80, 89) zum Verbinden von zwei peripheren Einheiten, wobei die Anschlußeinrichtungen (80, 89) eine Gruppe von Nasen (80), die an einer Seite jeder peripheren Einheit (56, 58, 60, 62) angebracht sind, wobei jede Nase (80) einen beabstandeten C-förmigen Abschnitt hat, und eine Gruppe von T-förmigen Zungenteilen (89) umfassen, die gleitend verschiebbar an der gegenüberliegenden Seite jeder peripheren Einheit (56, 58, 60, 62) angebracht sind, um die Nasen (80) an den benachbarten peripheren Einheiten zu erfassen, wodurch seitlich benachbarte periphere Einheiten sicher miteinander verbunden werden können.

6. System nach einem der Ansprüche 1 bis 4, bei dem Verriegelungsnasen (80) an einer Seite einer ersten Einheit der Einheiten (56, 58, 60, 62) vorgesehen sind, und ein Verriegelungsgleitteil (88) an einer Seite einer zweiten Einheit der Einheiten (56, 58, 60, 62) vorgesehen ist, wobei das Verriegelungsgleitteil (88) mit den Verriegelungsnasen (80) der zweiten Einheit in Eingriff kommen kann, und ein Steuerhebel (90) mit dem Verriegelungsgleitteil (88) verbunden ist, um das Gleitteil (88) von Hand in eine Verriegelungsineingriffnahme mit den Verriegelungsnasen (80) zu verschieben und aus dieser Verriegelungsineingriffnahme heraus zu schieben.

7. System nach Anspruch 6, bei dem Versteifungsnasen (84) auf der Seite der zweiten Einheit vorgesehen sind und so ausgebildet sind, daß sie in Aufnahmeöffnungen (86) vorstehen, die in der Seite der ersten Einheit vorgesehen sind, um die konstruktive Festigkeit und Starrheit der Verbindung zwischen den Einheiten sicherzustellen.

8. System nach einem vorhergehenden Anspruch, bei dem vier Buchsen (65, 66, 68) vorgesehen sind, wobei eine Buchse (66) oder (68) auf jeder der beiden Seiten vorgesehen ist, um eine Verbindung mit ähnlich konstruierten Einheiten herzustellen, wenn diese Einheiten an einer der Seiten mechanisch miteinander verriegelt werden, und zwei Buchsen (65) für den Kabelanschluß ausgebildet sind, um eine Verbindung zu einem Terminal (46) und eine Kreuzverbindung zur anderen peripheren Einheit zu ermöglichen.

## Revendications

1. Système de raccordement destiné à relier des unités périphériques à un terminal d'ordinateur (46), comportant:

deux ou plusieurs unités périphériques de terminal d'ordinateur (56, 58, 60, 62) pouvant être positionnées à l'écart du terminal d'ordinateur (46), chaque unité périphérique (56, 58, 60, 62) pouvant être actionnée de façon à générer un signal;

un processeur (64) compris dans chaque unité périphérique (56, 58, 60, 62) de façon à recevoir et traiter le signal généré par l'unité périphérique (56, 58, 60 62);

un segment de bus (72) compris dans chaque unité périphérique distante (56, 58, 60, 62), chaque segment de bus (72) ayant un connecteur d'extrémité (66, 68) formé à chaque extrémité et un autre connecteur (65) fixé à chaque segment de bus (72) entre les connecteurs d'extrémité (66, 68), le segment de bus (72) d'une unité périphérique pouvant être relié à l'aide d'un connecteur (par exemple (66)) au segment de bus (72) d'une autre unité périphérique, les segments de bus raccordés (72) conduisant les signaux traités des unités périphériques (56, 58, 60, 62) sur lesquelles les segments de bus raccordés (72) sont montés; et

un câble unique (54) raccordé entre le terminal d'ordinateur (46) et l'un (65) des connecteurs (65, 66, 68) de façon à transmettre au terminal (46) les signaux traités qui sont conduits par les segments de bus raccordés (72).

2. Système selon la revendication 1, dans lequel les dits connecteurs d'extrémité (66, 68) sont disposés de façon à relier le segment de bus (72) de l'unité périphérique respective à celui (72) des autres unités périphériques, et dans lequel le dit autre connecteur (65) est un connecteur pour câble permettant le raccordement au dit câble (54).

3. Système selon la revendication 2, dans lequel chaque segment de bus (72) possède un deuxième connecteur pour câble (65) qui y est fixé de façon à permettre un raccordement entre les segments de bus (72) de deux unités périphériques (58, 60) qui sont disposées à l'écart l'une de l'autre.

4. Système selon l'une quelconque des revendications précédentes, comportant en outre un contrôleur (52) relié au terminal d'ordinateur (46) et programmé pour recevoir les signaux traités et pour commander la séquence selon laquelle les signaux traités sont conduits par l'intermédiaire des segments de bus raccordés (72) au contrôleur (52).

5. Système selon l'une quelconque des revendications précédentes, comportant en outre des moyens (80, 89) pour relier deux unités périphériques, les moyens de raccordement (80, 89) comportant:

un ensemble de pattes (80) montées sur un côté de chaque unité périphérique (56, 58, 60, 62), chaque patte (80) ayant une section en forme de "C" espacée; et

un ensemble de parties de languette en forme de "T" (89) montées de façon coulissante sur le côté opposé de chaque unité périphérique (56, 58, 60, 62) de façon à engager les pattes (80) sur des unités périphériques adjacentes, les unités périphériques latéralement adjacentes pouvant ainsi être raccordées ensembles de façon sûre.

6. Système selon l'une quelconque des revendications 1 à 4, dans lequel les pattes de verrouillage (80) sont prévues sur un côté d'une première de ces unités (56, 58, 60, 62) et dans lequel une glissière de verrouillage (88) est prévue sur un côté d'une deuxième de ces unités (56, 58, 60, 62), la glissière de verrouillage (88) étant prévue pour engager les pattes de verrouillage (80) de la deuxième unité, et un levier de commande (90) étant relié à la glissière de verrouillage (88) pour faire coulisser manuellement la glissière (88) en et hors d'engagement avec les pattes de verrouillage (80).

7. Système selon la revendication 6, dans lequel des pattes de rigidification (84) sont prévues sur le côté de la deuxième unité et sont adaptées de façon à se projeter dans des ouvertures de réception (86) prévues dans le côté de la première unité afin d'assurer la résistance structurelle et la rigidité de l'interconnexion entre les unités.

8. Système selon l'une quelconque des revendications précédentes, dans lequel quatre connecteurs externes (65, 66, 68) sont prévus, un connecteur (66 ou 68) prévu sur chacun des deux côtés pour l'interconnexion avec des unités de structure similaire lorsqu'ils sont verrouillés mécaniquement à ces unités sur chacun des dits côtés, et deux connecteurs (65) prévus pour le branchement du câble de façon à permettre le raccordement à un terminal (46) et un raccordement croisé à une autre unité périphérique.

FIG. I

FIG. 2

EP 0 161 798 B1

FIG.3

FIG.6

2

FIG.5

FIG.4